# EUROPEAN PATENT SPECIFICATION

(11) **EP 0 951 932 B1**
(45) Date of publication and mention of the grant of the patent: **23.06.2004**
(21) Application number: 99850056.5
(22) Date of filing: 06.04.1999
(51) Int. Cl.: B01D 46/06, B01D 46/52, B01D 29/07

(54) **Filter and method for the fabrication thereof**
Filter und Verfahren zu seiner Herstellung
Filtre et procédé pour sa fabrication

(30) Priority: 09.04.1998 SE 9801249
(43) Date of publication of application: 27.10.1999
(73) Proprietor: CAMFIL AB, 619 33 Trosa (SE)
(72) Inventor: Carlsson, Niclas, 152 40 Södertälje (SE)
(74) Representative: Berglund, Erik Wilhelm

(56) References cited:
- EP-A- 0 382 329
- DE-A- 4 345 122

## Description

In order to be able to filtrate the large amounts of air that may be possible in for instance air condition installations it is known to use folded filters with a very great depth. These filters are sometimes called bag-filters since they can be considered as an amount of bags located at each other. In addition to the achieving of a large area for the filter material in this way the filter bags can at transport and storage be folded, which in particular is a saying transport-wise since the filter in the shape that it has when it is used is particularly bulky. As a result of the great areas in the separate bags these however have a considerable tendency to be blown up so that the triangular cross section shape desired for a good flow is easily lost. In order to counteract this it is known to sew fast threads cross-wise through the bag. This has no negative effect on the foldability of the filters. The sewing fast of threads in the filter material may however easily lead to damages in this either directly at the sewing or later when the filter is subjected to a load. Primarily these damages may result in leakages. why glue usually is applied as seal and security. In other words it is a question of comparatively many measures at the fabrication of these filters and in particular the manual effort will become comparatively large. Furthermore the use of glue makes impossible the ambition of a material as homogenous as possible in consideration of the coming destruction or recycling.

In view of the above problems at filters of this kind the object of the invention is to achieve a filter and a fabrication method for this respectively that can be executed simpler, faster, and with a more complete homogeneity of material.

In accordance with the invention the object of the invention is achieved by welding, between the opposed filter material sides of the filter bag, distance elements that then at the use of the filter can be extended to a different degree at different locations in the filter. In particular the distance material can consist of sheet material with openings, for instance with a shape in principal corresponding to a ladder but where the separate steps from being entirely straight in one end of the distance element become increasingly bent or V-shaped towards the other end. Since the connecting steps are longer in one end the longitudinal parts of the ladder can be pulled apart to different degrees so that a narrowing or widening ladder is obtained, dependent on in which direction it is viewed. By welding a ladder of sheet material eith one longitudinal part to the filter material on one side of the filter bag and the other longitudinal part of the ladder to the other the distance elements can at the welding be held with the longitudinal parts on the same distance, while at the blowing up of the filter the separate steps or connections are extended so that the intended shape of the filter is defined and maintained. The welding of the distance material can take place with filter material and distance material lying essentially flat and close to each other which facilitates the relative fixing before the welding. In addition to the simple welding method obtained in this way for the welding of the distance elements it is also easy to adapt the fabrication to differently wide bags since one quite simply changes the distance material sheet to one with shorter or longer extendable connections.

By the arrangement of in particular a distance element sheet over the entire depth of the filter bag it is possible to arrange the desired number of connections between the opposed sides of the bag by connecting alternating "longitudinal ladder parts" with the sides of the filter bag. In this way the distance element connection will not extend perpendicular to the filter material but instead a zigzag shaped framework will be obtained with obliquely or angled connections or bridges between the sides of the filter fold.

At the known filters where the distances extend straight through the filters against the filter material areas, when the filter is subjected to a load, depressions are easily obtained corresponding to the locations of the cross connections. This means that the outlet channels for the filter become somewhat more narrow than the inlet channels, which possibly must be compensated by making the transverse distances shorter. It is however also at the invention possible to obtain a deviation from the desired plane areas due to the flexibility of the filter material. Since the distances at the invention runs in zigzag the filter rather receives a tendency to wave shape but with a more constant distance in the cross direction. This wave shape can be used to stiffen the filter and is preferably arranged cross-wise in relation to the flow direction. By making close bags identical the flow conditions on the inlet side as well as on the outlet side can be made very uniform. The wave shape can also be used to increase the filter area.

Within the frame of the inventive thought one can consider to arrange the welded strips in relation to the filter material either running in the depth direction of the filter or cross-wise or perhaps in other directions or pattern or perhaps only in the shape of points. In all cases the connections can be made shorter close to the bottom and longer in the upper ends of the filter bags despite the welding being carried out with the filter material webs on a constant distance from each other.

The material in the distance elements that are welded between the filter material may have the same chemical composition as the filter material but be constituted by a comparatively thin foil from which material has been punched so that bent, V-shaped or zigzag shaped foil bands are obtained as distances (also other shapes may give the same result).

Sine the invented method allows continuous machine fabrication of filter bags by means of welding a good quality is obtained at a low cost and a minimum of manual work.

Even if above dominantly welding has been mentioned the invention may also function with other types of binding, as for instance gluing, seams, heat treatment etc. Likewise the distance elements may have different shape as long as they at use result in the desired for instance differently long connections. The welding to the sides of the filter need not to be along lines but may instead be in points. If the number of cross connections that is required is small or if these should be widely spread the distance element sheets or the web may also include parts that via easily separable extra connections are connected to the parts that are to be welded to the filter material and thereby holds the distance material in the right position until its welded. When the welding has taken place the separable part may be drawn loose from the welded parts and removed from the filter.

The distance elements can be of filter material, thin foil, net or a nonwoven material from which has been punched, cut, burnt or in some other way suitable connections with different lengths have been achieved.

Additional advantages and characteristics of the invention are apparent from the following description of preferred embodiments of the invention shown in the drawings. In the drawings fig 1 shows a machine for the fabrication of a filter in accordance with the invention, fig 2 a detail of the machine and the fabrication respectively, fig 3 a top view of a distance element according to the invention, fig 4 a section through a finished filter, fig 5 another embodiment of the distance element , fig 6 an additional version of the distance element in accordance with the invention, fig 7 how this is mounted and fig 8 a cross section through the filter made in this way, amd fig 9 amd 10 two additional distance elements accoding to the invention.

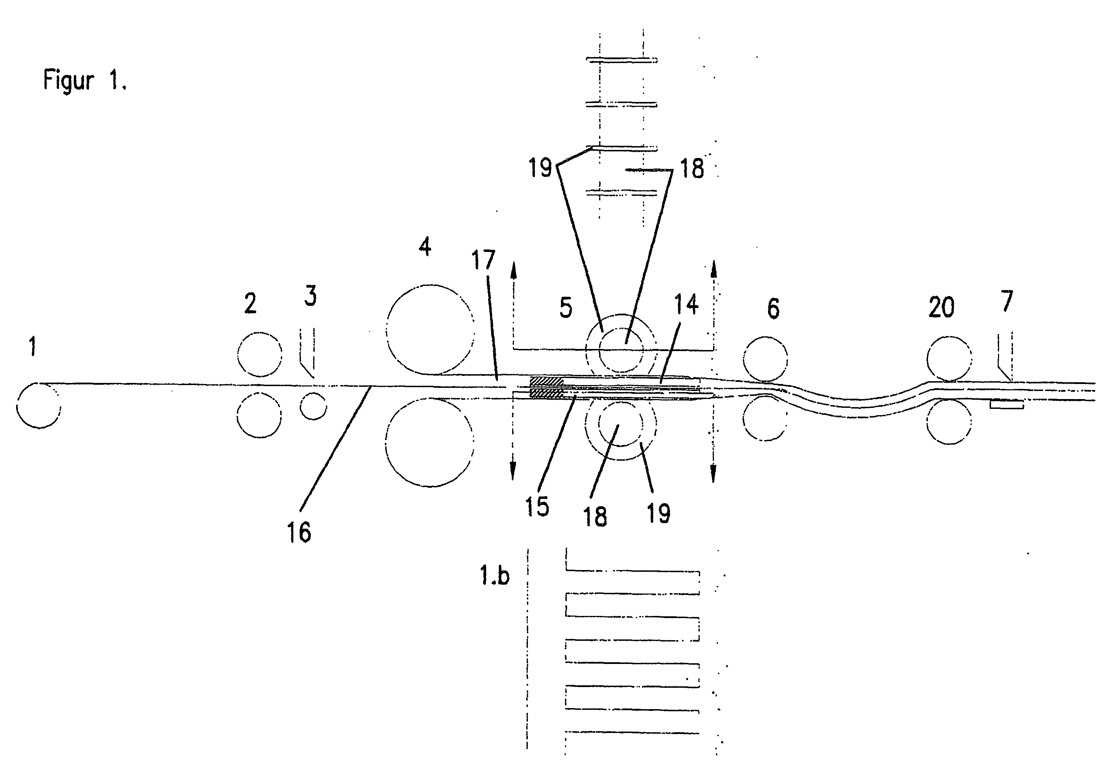

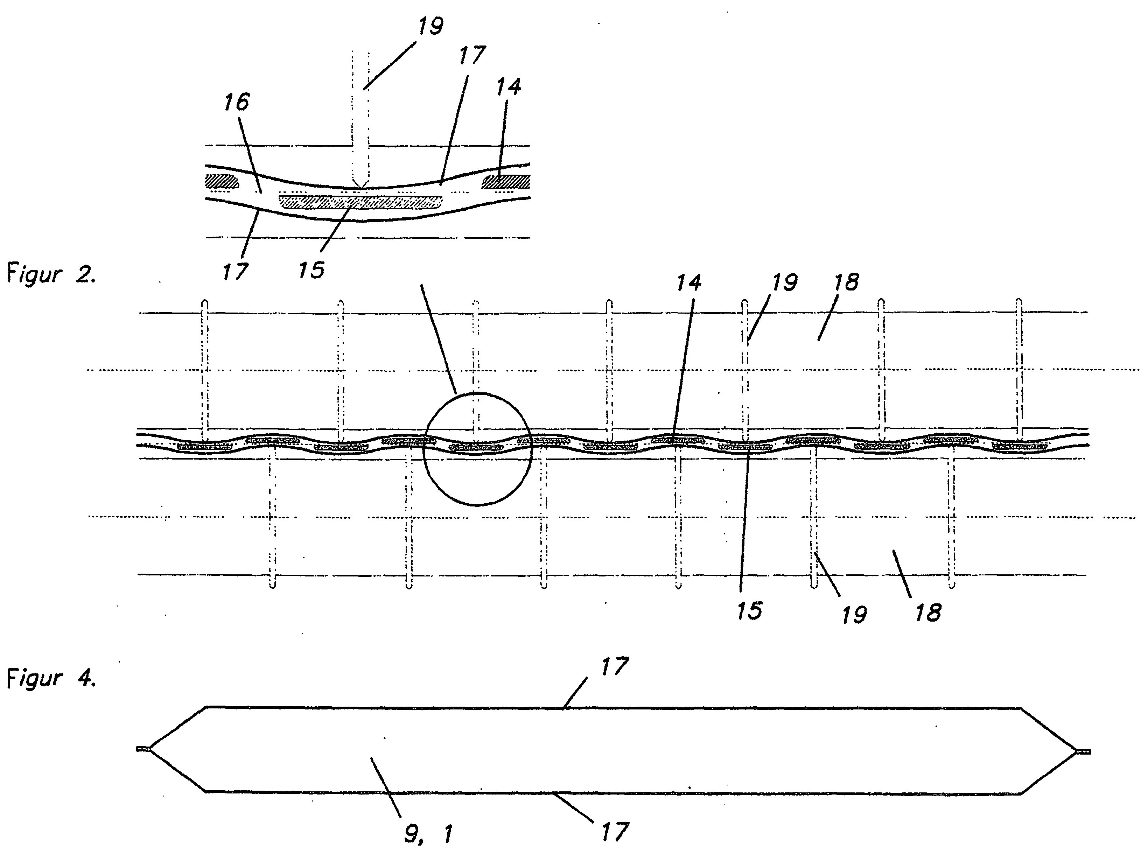

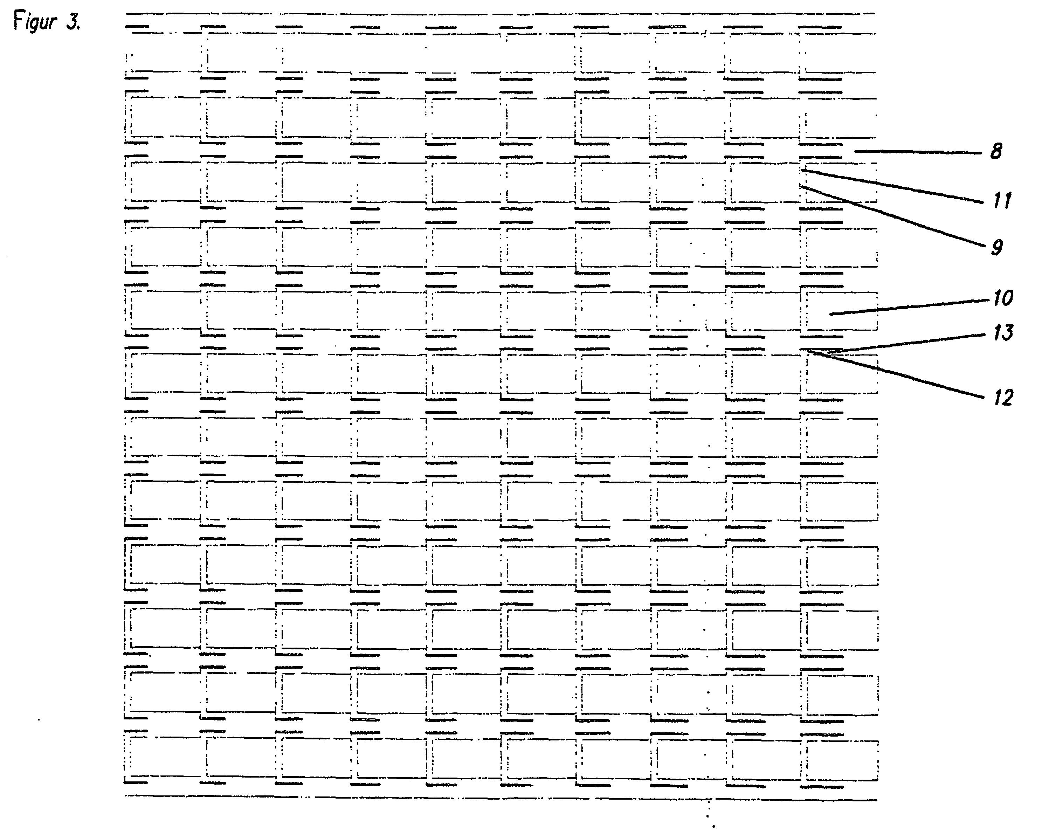

In the machine shown in fig 1 for the fabrication of filters, the filter material is fed from two rolls 4 towards a welding station 5. From an additional roll 1 distance element material of foil or sheet material is fed in between two rolls 2 that mill or punch away rectangular openings 10 (see fig 3), so that the distance material temporarily receives the shape of an endless net band constituted of longitudinal strips 8 and cross connections with intermediate openings 10. As an extension of the left edge of the cross connections a cut 11 extends a short distance (corresponding to slightly more than the width of the connection 9) into the strips 8. A subsequent punch 3 then cuts slots 12 in the strips 8 achieving an extension 13 of the cross connections 9 so that U-shaped connections are achieved between adjacent strips. By letting the punch cut differently deep differing total lengths for the U-shaped connections is achieved. The part of the distance material shown in fig 3 corresponds to a filter bag with long connections to the right adjacent to the opening of the filter.
In the welding station 5 dollies 14 and 15 are arranged as is apparent from fig 1 and 2 above and below the distance material 16. The dollies have as is apparent from fig 1b the shape of crosswise arranged combs with broader openings between the teeth than these are broad and are relative each other displaced laterally (fig 2). The filter material 17 is fed past the dollies over and under these respectively. Above and below respectively the fed filter material 17 weld rolls 18 with flanges 19 are arranged. The flanges 19 of the rolls 18 as well as the "teeth" of the dollies are located corresponding to the longitudinal strips 8 of the distance material. The flanges 19 press the filter material 17. against the dollies 14 and 15 with the distance material therebetween. Ultra sound is fed to the rolls so that distance material and filter material is welded together along the strips 8.

After the welding the connected material is drawn from the dollies, that so to say extends into the filter, further by rolls 6 t a combined separating and welding station 7 where the material step-wise is fed forwards by rolls 20 and is welded along the edges and also separated into individual bags. That is the welded bags are welded in the bottom at the same time as they are cut away from the upper end of the next filter bag. In the shown case the filter bags are made with their openings turned in the running direction of the filter material during the fabrication either forwards or backwards depending on the orientation of the distance elements.

When the rolls stand still during the welding and cutting the material hangs in an increasing bow between the rolls 6 and 20.

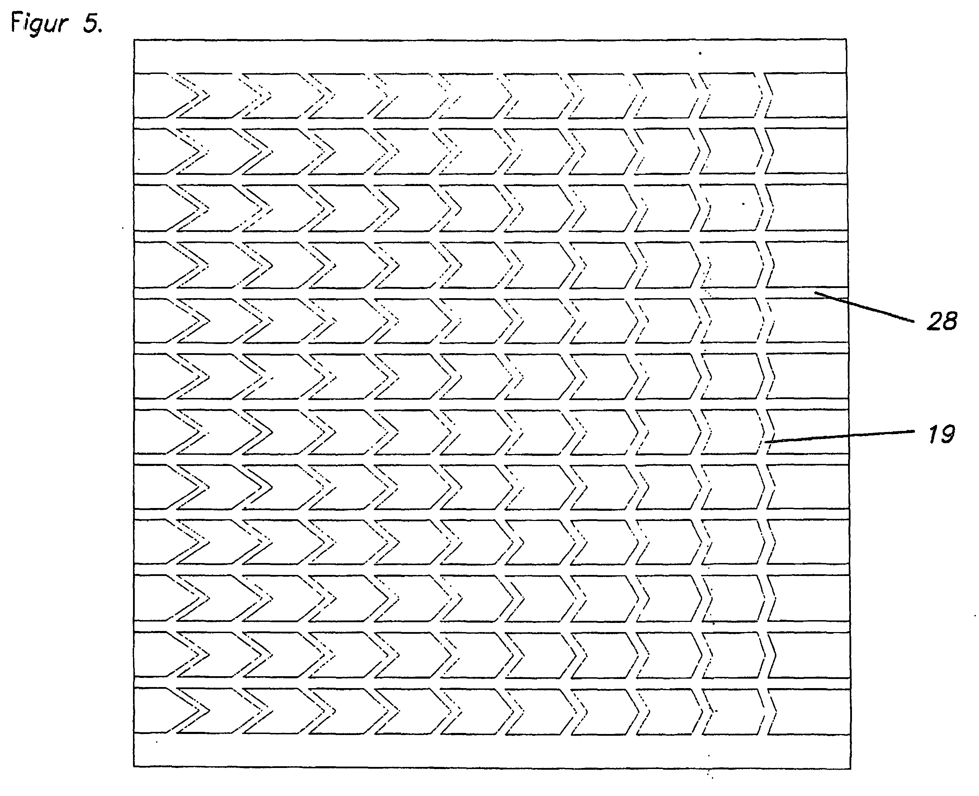

Since the U-shaped connections have different lengths depending on how deeply they are situated in the filter its triangular cross section is supported in the desired way. The connections are at the use of the filter drawn out and become straight with varying length so that the cross section shown in fig 4 is obtained.

In fig 5 another distance element according to the invention is described constituted of longitudinal strips 28 connected with V-shaped cross connections 19. The V-shaped connections are differently sharply angled. In the part furthest down (in the filter fold or bag) the angle is very obtuse and consequently the length of the connection between the strips only slightly longer than the distance between the strips. With increasing distance upwards in the filter, that is upwards on the side, the angles become sharper, that is the length of the connections increase. This means that when the has been made the connections will constitute distance elements between the sides of the filter with increasing distance towards the opening side of the filter. The longitudinal strips run in the feed direction of the filter material and the distance material can be used in the installation described in connection with fig 1 and 2.

In order to ensure that the longitudinal strips remain in the right position laterally these may partly be subjected to a certain tension in the length direction but in addition to this transverse uncut connection may exist for lateral support at the parts that correspond to the bottoms of the filter bags, that is furthest to the left in fig 3 and furthest to the right in fig 3.

As is apparent form fig 3 and 5 distance element connections may be achieved evenly distributed and comparatively closely over the surface of the filter securing a good continuity over the filter that thus will yield good flow conditions. The present internal connections result in so little flow resistance that the flow conditions are not effected in any degree to speak of.

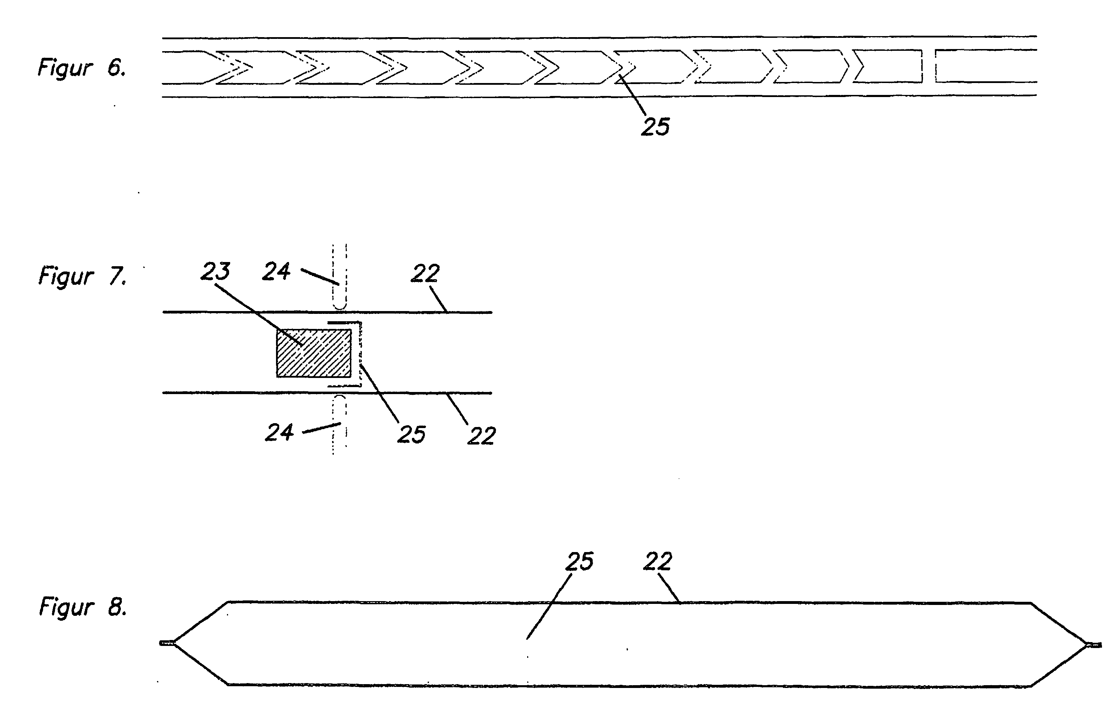

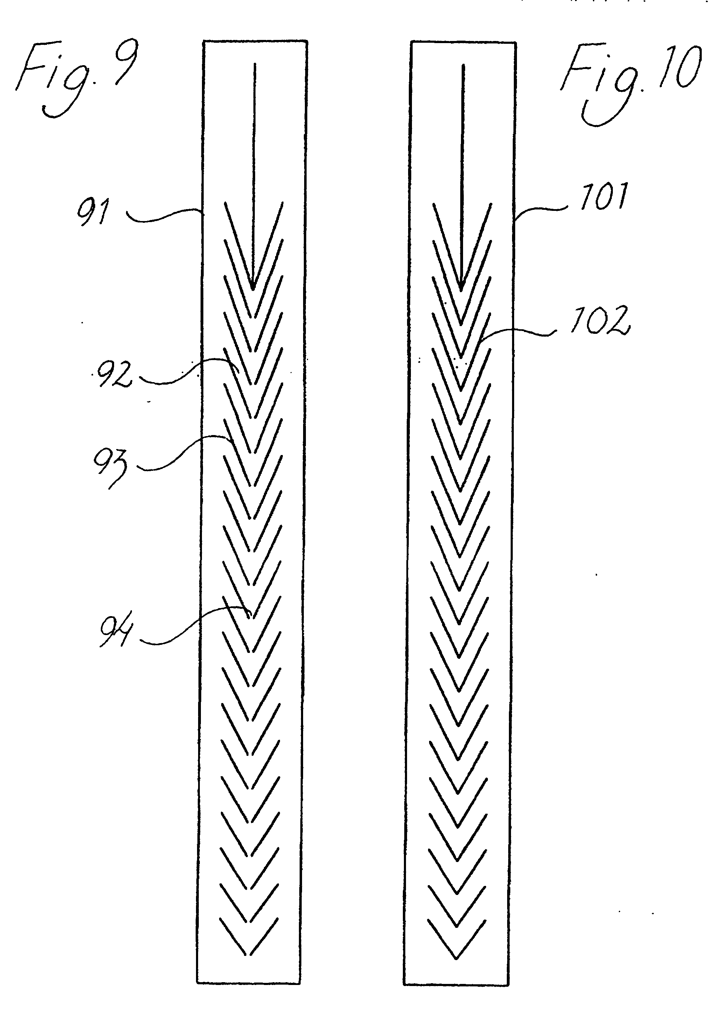

As an alternative to the above described method one can instead consider that bands 21 of distance element with a look corresponding to that shown in fig 6 is welded to opposite sides of the filter material 22, for instance by being bent to a half circular channel that is guided along a dolly 23 at the same time as welding takes place with two rolls 24. The cross connections 25 in the band then define the distance between the sides of the filter. This gives the appearance that is shown in fig 7 that is the distance connections are perpendicular to the filter material.

At the method described with reference to fig 6 bands 91 punched or cut as is shown in fig 9 may be used. Here cross connections 92 with different lengths are achieved due to different angles for the cuts 93. Since the cross connections 92 are connected to each other with a centrally arranged bridge 94 a much more stable strip is obtained much facilitating the machine mounting.

If so desired the central connecting bridge can be used to contract the filter in the loser end of the filter. Since the filter in the upper end is forced open already by the mounting in a frame the upper cross connections will pull the central bridge upwards and if the connections in the lower end of the filter initially for instance are essentially straight this vertical pull upwards will reduce the width here pulling the sides of the filter closer together.

In order to increase the stability for the distance element bands further several vertical bridges may be arranged so that a net like structure is obtained.

In order to allow the vertical movement at straightening of the connections the bridge or bridges must be interrupted at top and bottom but still a far more controllable and more easily handled distance element is obtained, considerably facilitating fabrication.

In the part of the distance element that in the ready filter is located at the top of the filter folds a longitudinal vertical slot is arranged allowing the separation of the edges of the band but without reduction of the stability. Furthermore small deviations in the vertical position of he distance band at mounting will not be critical. The distance element band that during the welding is pulled forwards is due to the continuous edges and stable bridging stable until the mounting has been completed and the distance element and filter material are cut into the individual filter bags.

In fig 10 is shown a distance element strip 101 with v-shaped slots 102 but without central bridging.

The invented method need not to include bands running in the length direction of the material webs but fixing can instead take place along bands that run transversely in relation to the material webs, preferably the welding or fixing is intermittent and does not need to be in the shape of a line but may even be arranged as points. Nor do the filter bags have to be arranged in the above described manner but instead one can consider letting the filter bags have their openings towards an edge of the webs. In this way it is even possible with simple machine mounting of bag lists or rims at the edges of the edges of the bags to be.

The bridges or connections in the distance material is preferably shaped considering how the sides of the filter bags move at the separation from the position at fabrication to the position of mounting. By means of the distance element according to the invention and the mounting method respectively a very large freedom in the choice of the shaping otherwise is obtained due to its great adaptability so that a very rational fabrication can be achieved.

Since the strip constituting the strip is punched one can also consider that the connection making openings or special openings in this can be detected by for instance photo cells in order to synchronize the strip material with the welding of the filter bags.

## Claims

1. Method for the achieving of connections between opposing sides in a filter fold or filter bag, **characterized in that** between the opposed sides of the filter material is arranged a distance material of punched material that is welded in points or along lines to the two filter material sides so that the distance material at these points or lines either is fastened to one filter side or the other and that the distance material includes connections or bridges between the parts that are welded to the different filter sides, which bridges are punched from the distance material so that they at the use of the filter can be drawn out and constitute essentially transverse distance elements.

2. Method according to claim 1, **characterized in that** the connections or bridges have varying length according to the location over the filter so that the filter bag can be given a narrowing contour.

3. Method according to claim 1 or 2, **characterized in that** the distance element along alternating lines are welded continuously to two filter material webs that then in the length direction are divided into separate filters.

4. Filter constituted by opposed sides of filter material that are held together by intermediate distance elements of sheet material that has been welded to both sides of filter material **characterized in that** between the welding points connections are arranged that are curved or angled in the plane of the sheet material so that they at the use of the filter can be drawn out or extended to a greater length than the distance between the welds at the welding.

5. Filter according to claim 4, **characterized in that** the connections have different length to provide a narrowing filter cross section.

6. Distance element for the welding to two opposite filter material surfaces for the making of an intermediate connection, **characterized in that** the distance element includes curved or angled bridges between fastening points on the different filter surfaces so that the distance between the filter surfaces are controlled by the length of the extended bridges.

7. Distance element according to claim 6, **characterized in that** it comprises a sheet with approximately the same area as the dimensions of the dimensions of the filter fold or bag.

8. Distance element according to claim 6, **characterized in that** it includes connections or bridges with different lengths in extended condition for the achieving of narrowing filter folds or bags.

9. Distance element **characterized in that** it is constituted by strips that between their two longitudinal edges are provided with connecting bridges with different lengths so that the distance elements when welded with opposed edges to opposed filter surfaces give a narrowing filter shape.

10. device for the execution of the method according to claim 1, **characterized in that** it includes two comblike dollies, displaced relative each other and arranged so that a distance element can be entered between them and on each side of the pair of dollies are flange provided rolls arranged for welding,for instance with ultra sound, of between dollies and rolls fed filter material that is welded to the distance material.

11. Distance element, **characterized in that** it is provided with cross connections with different extended lengths and that the cross connections are connected to each other in larger or smaller groups by one or several bridges, for instance one centrally located or several for instance in a symmetric pattern.

## Patentansprüche

1. Verfahren zum Herstellen von Verbindungen zwischen gegenüberliegenden Seiten einer Filterfalte oder eines Filterbeutels, **dadurch gekennzeichnet, daß** zwischen den gegenüberliegenden Seiten des Filtermaterials ein Distanzmaterial als ausgestanztes Material angeordnet ist, welches an Punkten oder längs Linien an den beiden Filtermaterialseiten derart angeschweißt ist, daß das Distanzmaterial an diesen Punkten oder Linien entweder an einer der Filterseiten oder an der anderen befestigt ist, und daß das Distanzmaterial Verbindungen oder Brücken zwischen den Teilen umfaßt, welche an verschiedenen Filterseiten angeschweißt sind, wobei die Brücken aus dem Distanzmaterial derart ausgestanzt sind, daß sie im Gebrauchszustand des Filters ausgestreckt werden können und im wesentlichen in Querrichtung verlaufende Distanzelemente bilden.

2. Verfahren nach Anspruch 1, **dadurch gekennzeichnet, daß** die Verbindungen oder Brücken sich ändernde Längserstreckungen nach Maßgabe der Lage am Filter haben, so daß der Filterbeutel eine schmalere Kontur erhalten kann.

3. Verfahren nach Anspruch 1 oder 2, **dadurch gekennzeichnet, daß** das Distanzelement längs abwechselnden Linien kontinuierlich in zwei Filtermaterialbahnen eingeschweißt wird, und daß dann in Längsrichtung eine Unterteilung in gesonderte Filter vorgenommen wird.

4. Filter, welcher durch gegenüberliegende Seiten aus Filtermaterial gebildet wird, welche mittels dazwischen liegenden Distanzelementen aus einem Flächenmaterial zusammengehalten sind, das an die beiden Seiten des Filtermaterials eingeschweißt ist, **dadurch gekennzeichnet, daß** zwischen den Schweißpunkten Verbindungen angeordnet sind, welche gekrümmt oder abgewinkelt in der Ebene des Flächenmaterials ausgelegt sind, so daß sie im Gebrauchszustand des Filters gestreckt oder zur Erzielung einer größeren Längserstreckung als der Abstand zwischen den Schweißstellen an der Schweißnaht ausgefahren werden können.

5. Filter nach Anspruch 4, **dadurch gekennzeichnet, daß** die Verbindungen unterschiedliche Längen haben, um einen schmalen Filterquerschnitt zu erhalten.

6. Distanzelement zum Anschweißen an zwei gegenüberliegenden Filtermaterialflächen zur Herstellung einer Zwischenverbindung, **dadurch gekennzeichnet, daß** das Distanzelement gekrümmte oder abgewinkelte Brücken zwischen Befestigungspunkten an den verschiedenen Filterflächen umfaßt, so daß der Abstand zwischen den Filterflächen durch die Länge der ausgestreckten Brücken eingestellt wird.

7. Distanzelement nach Anspruch 6, **dadurch gekennzeichnet, daß** es ein Flächenmaterial mit etwa demselben Flächenbereich wie die Abmessungen der Abmessung der Filterfalte oder des Beutels aufweist.

8. Distanzelement nach Anspruch 6, **dadurch gekennzeichnet, daß** es Verbindungen oder Brücken mit unterschiedlichen Längen im ausgestreckten Zustand umfaßt, um schmalere Filterfalten oder Beutel zu bilden.

9. Distanzelement **dadurch gekennzeichnet, daß** es von Streifen gebildet wird, die zwischen ihren beiden Längskanten mit Verbindungsbrücken mit unterschiedlichen Längen versehen sind, so daß die Distanzelemente eine schmale Filtergestalt ergeben, wenn sie an den gegenüberliegenden Rändern an den gegenüberliegenden Filterflächen eingeschweißt sind.

10. Vorrichtung zur Durchführung eines Verfahrens nach Anspruch 1, **dadurch gekennzeichnet, daß** sie zwei kammähnliche Widerlager umfaßt, die relativ zueinander verschoben und derart angeordnet sind, daß ein Distanzelement zwischen denselben eingeführt werden kann, und daß auf jeder Seite des Paars von Widerlagern mit Flanschen versehene Rollen zum Schweißen beispielsweise mittels Ultraschall angeordnet sind, wobei zwischen den Widerlagern und den Rollen Filtermaterial zugeführt wird, welches an dem Distanzmaterial angeschweißt wird.

11. Distanzelement, **dadurch gekennzeichnet, daß** es mit Querverbindungen mit unterschiedlichen Längserstreckungen versehen ist, und daß die Querverbindungen miteinander in größeren oder kleineren Gruppen durch eine oder mehrere Brücken verbunden sind, beispielsweise einer zentral angeordneten oder mehreren zur Erzielung eines symmetrischen Musters.

## Revendications

1. Procédé pour l'obtention de connexions entre des côtés opposés d'un pliage filtrant ou d'un sac filtrant, **caractérisé en ce qu'**entre les côtés opposés du matériau filtrant est agencé un matériau d'écartement constitué d'un matériau poinçonné qui est soudé par points ou le long de lignes sur les deux côtés de matériau filtrant de sorte que le matériau d'écartement au niveau de ces points ou lignes est fixé sur un premier côté filtrant ou l'autre et **en ce que** le matériau d'écartement comporte des connexions ou des ponts entre les parties qui sont soudées sur les différents côtés de filtre, lesquels ponts sont poinçonnés à partir du matériau d'écartement de sorte qu'au niveau de l'utilisation du filtre, ils peuvent être étirés et constituer essentiellement des éléments d'écartement transversaux.

2. Procédé selon la revendication 1, **caractérisé en ce que** les connexions ou ponts ont une longueur variable selon l'emplacement sur le filtre, de sorte que le sac filtrant peut être doté d'un contour se rétrécissant.

3. Procédé selon la revendication 1 ou 2, **caractérisé en ce que** l'élément d'écartement le long de lignes alternées est soudé en continu sur deux bandes de matériau filtrant qui, ensuite, dans la direction de la longueur sont divisées en filtres séparés.

4. Filtre constitué par des côtés opposés de matériau filtrant qui sont maintenus ensemble par des éléments d'écartement intermédiaires de matériau en feuille qui ont été soudés sur les deux côtés du matériau filtrant, **caractérisé en ce qu'**entre les points de soudage, des connexions sont agencées, qui sont incurvées ou en angle dans le plan du matériau en feuille, de sorte qu'au niveau de l'utilisation du filtre, elles peuvent être étirées ou étendues sur une longueur plus grande que la distance entre les soudures au niveau du soudage.

5. Filtre selon la revendication 4, **caractérisé en ce que** les connexions ont une longueur différente pour fournir une section transversale de filtre se rétrécissant.

6. Elément d'écartement pour le soudage sur deux surfaces de matériau filtrant opposées pour réaliser une connexion intermédiaire, **caractérisé en ce que** l'élément d'écartement comporte des ponts incurvés ou en angle entre des points de fixation situés sur les différentes surfaces filtrantes, de sorte que l'écartement entre les surfaces filtrantes est commandé par la longueur des ponts étendus.

7. Elément d'écartement selon la revendication 6, **caractérisé en ce qu'**il comporte une feuille ayant approximativement la même aire que les dimensions des dimensions du pliage ou sac filtrant.

8. Elément d'écartement selon la revendication 6, **caractérisé en ce qu'**il comporte des connexions ou ponts ayant différentes longueurs dans un état étendu pour obtenir des pliages ou sacs filtrants se rétrécissant.

9. Elément d'écartement, **caractérisé en ce qu'**il est constitué par des bandes qui, entre leurs deux bords longitudinaux, sont munies de ponts de connexion ayant différentes longueurs, de sorte que les éléments d'écartement, lorsqu'ils sont soudés avec des côtés opposés sur des surfaces filtrantes opposées, donnent une forme de filtre se rétrécissant.

10. Dispositif pour l'exécution du procédé selon la revendication 1, **caractérisé en ce qu'**il comporte deux chariots analogues à un peigne, déplacés l'un par rapport à l'autre et agencés de sorte qu'un élément d'écartement peut être introduit entre eux, et sur chaque côté de la paire de chariots existent des rouleaux munis de rebords agencés pour le soudage, par exemple à l'aide d'ultrasons, d'un matériau filtrant alimenté entre des chariots et des rouleaux qui est soudé sur le matériau d'écartement.

11. Elément d'écartement, **caractérisé en ce qu'**il est muni de connexions transversales ayant différentes longueurs étendues et **en ce que** les connexions transversales sont connectées les unes aux autres en groupes plus grands ou plus petits par un ou plusieurs ponts, par exemple un pont positionné centralement ou plusieurs par exemple selon un motif symétrique.
